# EUROPEAN PATENT SPECIFICATION

(11) **EP 2 333 870 B1**
(45) Date of publication and mention of the grant of the patent: **23.05.2012**
(21) Application number: 10175378.8
(22) Date of filing: 06.09.2010
(51) Int. Cl.: H01M 2/04, H01M 2/02, H01M 2/06

(54) **Secondary battery**
Sekundärbatterie
Batterie secondaire

(30) Priority: 30.11.2009 US 265223 P
(43) Date of publication of application: 15.06.2011
(73) Proprietor: Samsung SDI Co., Ltd., Gyeonggi-do (KR)
(72) Inventor: Baek, Woon-Seong, Gyeonggi-do (KR)
(74) Representative: Gulde Hengelhaupt Ziebig & Schneider

(56) References cited:
- WO-A1-2008/050955
- DE-A1- 10 350 694
- JP-A- 2006 202 629

## Description

### Field of the Invention

An embodiment relates to a secondary battery and, more particularly, to a secondary battery capable of achieving assembly stability of a bare cell and a top case in which an exterior shape is irregular due to problems in a manufacturing process and management, such that it is difficult to set a standard.

### Discussion of Related Art

In general, a secondary battery as a battery in which inter-conversion between chemical energy and electrical energy is reversible, such that charging and discharging can repetitively be performed, is raising a lot of interests as a driving power supply for mobile and portable IT apparatuses with a decrease in weight and an increase in functionality thereof.

The secondary battery includes a nickel-cadmium battery, a nickel-hydrogen battery, a nickel-zinc battery, a lithium secondary battery, etc. Among them, since the lithium secondary battery is rechargeable and can have a small size and be miniaturized and high capacity and high operating voltage and high energy density per unit weight, the lithium secondary battery is widely used in an advanced electronic apparatus field and includes a lithium-ion battery, a lithium-ion polymer battery a lithium polymer battery, etc. as its type.

Among them, in particular, in case of a polymer battery, a bare cell is sealed after exposing an anode terminal and a cathode terminal from an electrode assembly to the outside. In addition, an additional insulating tape, etc. for insulation are attached to outer surfaces of the anode and cathode terminals which are in contact with a sealed part at the time of exposing the anode and cathode terminals to the outside. This is also generally referred to as an insulating wing portion or an insulating terrace portion. However, the insulating wing portion or the insulating terrace portion that is constituted by insulating tape is frequently contracted and transformed due to heat at the time of sealing the bare cell. In addition, when the insulating wing portion is deteriorated, size stability is deteriorated and it is difficult to provide a battery pack satisfying an overall outline dimension of the cell. In particular, interference occurs at the time of assembling the cell with the top case due to the insulating wing portion which is deteriorated due to the heat, such that the overall size stability and reliability of the battery pack are deteriorated.

JP 2006 202629 A discloses cutouts between insulating wing portions and the top of the case to prevent interference with the electrode terminal.

### SUMMARY OF THE INVENTION

An embodiment provides a secondary battery capable of evading interference which occurs between an insulating portion of a bare cell and a top case assembled therewith by forming a void, opening or recession in the top case achieving the stabilization of an inner pack manufacturing process while not influencing an outer dimension of an inner pack.

Accordingly, a secondary battery is provided, the battery comprising an electrode assembly having a first electrode and second electrode, a bare cell for mounting the electrode assembly therein, a top case coupled to the upper part of the bare cell, a first insulating portion for insulating at least a part of the first electrode, and a second insulating portion for insulating at least a part of the second electrode, the first and second insulating portions being formed in the upper part of the bare cell. Voids or empty spaces are provided between the first and second insulating portions and the top case to space apart the top case from the first and second insulating portions. The voids comprise openings or recessions formed in the top case, even more preferably in at least one side wall of the top case. The openings or recessions define at least first and second openings or recessions sized to space apart the top case from the first and second insulating portions, respectively. The at least first and second openings or recessions are preferably formed on or in at least a first side wall of the top case. The at least first side wall of the top case further comprises first support ribs formed between the openings or recessions to support the top case on the bare cell, and second support ribs at locations of the openings or recessions being adapted to cover the first and second electrodes.

Preferably, a sealing portion is provided in the upper part of the bare cell to seal the bare cell, and the first and second insulating portions are provided at locations between the first and second electrodes and the sealing portion.

The first and second insulating portions preferably comprise an insulating material. Additionally or alternatively, they are covered at least partially by an insulating tape.

The second support ribs preferably have a width smaller than the width of the openings or recessions.

The first support ribs are sized to support the top case on the bare cell.

The first and/or second support ribs preferably protrude from the top surface of the top case towards its bottom surface in an assembled state.

A first side wall of the top case preferably comprises at least the following structural elements in alternating order: a first end portion, a first first support rib, a first opening, a second first support rib, a second opening, a third first support rib and a second end portion. Alternatively, a first side wall of the top case preferably comprises at least the following structural elements in alternating order: a first end portion, a first first support rib, a first opening, a first second support rib formed within the first opening, a second first support rib, a second opening, a second second support rib formed within the second opening, a third first support rib and a second end portion.

The openings or recessions extend to the bottom of said first side wall of the top case such that no top case material is formed at a lower part of said first side wall. Additionally or alternatively, the openings or recessions are cut-outs of the first side wall from below.

The bare cell is preferably formed of a pouch type.

According to an embodiment of the present invention, a secondary battery can evade interference which occurs at the time of assembling a bare cell and a top case by the way of forming insulating portions in the bare cell in which an exterior shape is irregular due to problems in a manufacturing process and management, such that it is difficult to set a standard. As a result, it is possible to not influence the external dimension of an inner pack and achieve the stabilization of a manufacturing process of the inner pack, and secure the reliability and competency of the inner pack to which the bare cell is applied.

### BRIEF DESCRIPTION OF THE DRAWINGS

The accompanying drawings, together with the specification illustrate exemplary embodiments of the present invention, and, together with the description, serve to explain the principles of the present invention.

FIG. 1 is a front view showing a top case of a general secondary battery;

FIG. 2 is a front view showing a part of a bare cell of a secondary battery;

FIG. 3 is a front view showing a secondary battery according to a first embodiment of the present invention;

FIG. 4 is a perspective view showing a top case of a secondary battery according to a first embodiment of the present invention; and

FIG. 5 is a front view showing a secondary battery according to a second embodiment of the present invention.

### DETAILED DESCRIPTION OF THE INVENTION

Hereinafter, embodiments of the present invention will be described in detail with reference to the accompanying drawings. Further, the embodiment of the present invention provides to more completely describe the present invention to those skilled in the art and the embodiment described below may be modified in various other forms and the scope of the present invention is not limited to the embodiment described below.

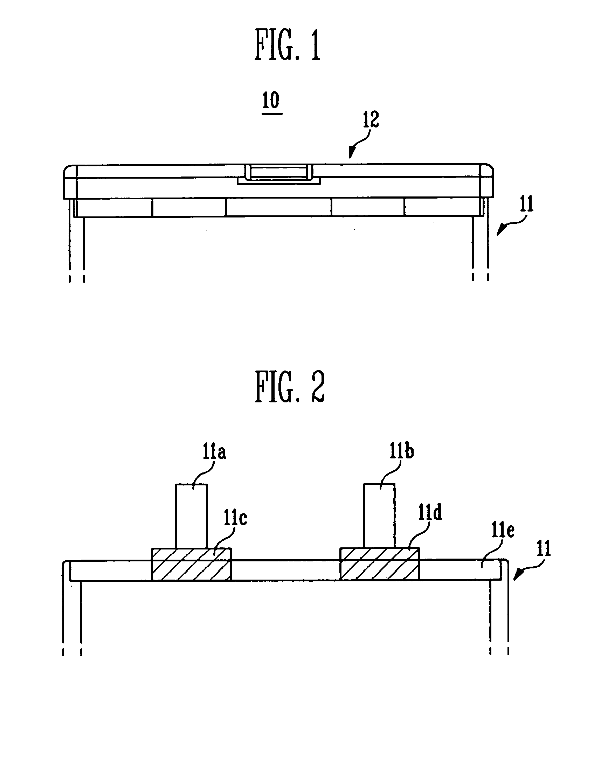

FIG. 1 is a front view showing a top case of a general secondary battery and FIG. 2 is a front view showing, particularly, a part of a polymer cell, throughout the following referred to as a bare cell of a secondary battery. Referring to FIG. 1, the secondary battery 10 includes a bare cell 11 housing an electrode assembly (not shown) therein and a top case 12 assembled on the top of the bare cell 11.

Referring to FIG. 2, the electrode assembly (not shown) is housed in the bare cell 11, parts of lead tabs 11a and 11b serving as an anode terminal and a cathode terminal is exposed from the electrode assembly to the outside of the bare cell 11, and a sealing portion 11 e where the bare cell 11 is sealed is provided at portions where the lead tabs 11a and 11b are exposed. At this time, insulating wing portions 11c and 11d for insulation are provided at portions of the lead tabs 11 a and 11 b which the sealing portion 11 e contacts, respectively.

In addition, in the bare cell 11, safety devices such as a protecting circuit module (PCM) and a secondary protection device are provided in order to prevent an increase of high temperature or overcharge and overdischarge, or the like and any one side of the PCM is connected to a positive pole of the bare cell 11 and the other side of the PCM is connected to a negative pole of the bare cell 11 in a state where the PCM (not shown) is assembled in the top case 12. At this time, the secondary protection device (not shown) may be connected between the PCM and the bare cell 11 and the secondary protection device may be connected to the positive pole or negative pole depending on characteristics of the bare cell 11. A subsidiary material is attached thereto to complete an inner pack of the secondary battery.

However, in the bare cell of the secondary battery formed through the assembling, the insulating wing portions 11c and 11 d constituted by an insulating tape, etc. is also influenced by heat at the time of compressing the sealing portion 11e by using the heat. When the insulating wing portions 11 c and 11d constituted by the insulating tape, etc. are influenced by the heat, exterior portions of the insulating wing portion 11c and 11 d are contracted or deteriorated, such that the overall size stability of the bare cell 11 is deteriorated and as a result, it is difficult to satisfy the overall outline size of the polymer. In particular, a terrace of a terminal portion of the bare cell 11, that is, the insulating wing portions 11 c and 11d as portions which are not managed in the manufacturing process has many distributions.

In addition, when the top case 12 is assembled to the bare cell 11 having the insulating wing portions 11c and 11d deteriorated due to the heat by the deteriorated insulating wing portions 11c and 11 d, the interference between the insulating wing portion 11c and 11d and the top case is necessarily caused, thereby damaging the stabilization of the manufacturing process.

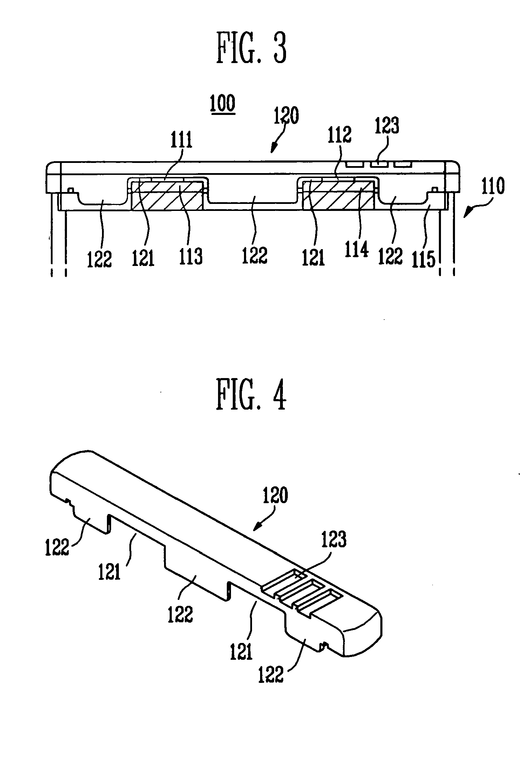

FIG. 3 is a front view showing a secondary battery according to a first embodiment of the present invention. As shown in the figure, the secondary battery 100 according to the first embodiment of the present invention includes the polymer cell or bare cell 110 having the insulating wing portions or to be short, insulating portions 113 and 114 in the lead tabs 111 and 112 and the top case 120 which is assembled to the top of the bare cell 110 and where the void, opening or recession 121 is provided.

In the first embodiment of the present invention, a free or empty space, void, opening or recession 121 is formed in the top case 120 at portions which the insulating wing portions 113 and 114 of the lead tabs 111 and 112 contact. The void, opening or recession 121 is formed in at least one side wall of the top case 120, in Fig. 3 at least the front wall. Preferably a void, opening or recession 121 is also formed in the opposing side wall, in Fig. 3 the back wall. A void, opening or recession is preferably a two-dimensional cut-out in a side wall of the top case 120. The void, opening or recession 121 extends to the bottom of said side wall of the top case 120 such that no top case material is formed below said opening or recession 121 at a lower part of said first side wall. The void, opening or recession 121 could be formed by cutting out a side wall from below. However, in a three-dimensional view, three-dimensional empty spaces or voids are formed between the insulating portions 113, 114 and the top case 120 to space apart the top case from the insulating portions 113, 114. Thus, three-dimensionally, the insulating portions 113, 114 do not contact the top case 120. The above described structure of the top case 120 also holds for all other embodiments of the present invention. Without limitation, during the following, the term "void" will be mainly used for the non-interference structure labeled 121 and 221 in the figures.

Therefore, the insulating portions 113 and 114 are positioned in the opening or recession 121 of a side wall of the top case 120 without interference. In other words, in a two-dimensional projection, the insulating portions 113, 114 are formed within the openings or recessions 121 of the respective wall of the top case such that no overlap with the respective wall of the top case exists. Accordingly, even though the insulating portions 113 and 114 are deteriorated by the heat, the interference is not entirely generated due to the void 121 formed in the top case 120 and the assembling can be performed. Further, it is possible to improve the robustness of inter-assembling between the cell and the top case 120 by forming one or more first support ribs 122 between the voids 121 in the top case 120.

The electrode assembly (not shown) is housed in the bare cell 110, the parts of the lead tabs 111 and 112 serving as the anode terminal and the cathode terminal are exposed from the electrode assembly to the outside, and a sealing portion 115 for sealing is provided at portions to which the lead tabs 11 and 112 are exposed. Herein, the insulating portions 113 and 114 are provided at a portion where the lead tabs 111 and 112 drawn from the bare cell 110 contact the sealing portion 115 so as to insulate the lead tabs 111 and 112 from an external member of the bare cell. The insulating portions 113 and 114 as terrace portions of the terminal portion at which the lead tabs 111 and 112 of the bare cell 110 are positioned may be constituted by a material for insulation or the insulating tape.

FIG. 4 is a diagram showing a top case 120 where a void 121 is formed. The void 121 is formed on any one surface of a front surface or a rear surface of the top case 120 at a position which the insulating portion contacts and may be formed on both the front surface and the rear surface. Further, one or more first support ribs 122 are provided between the voids 121 or a portion where the void 121 is not formed. The first support rib extends with a length to more firmly combine and support the bare cell.

As such, when the top case 120 having the void 121 and the first support rib 122 is assembled to the bare cell 110, the void 121 of the top case 120 may be provided to include both the insulating portions 113 and 114 and like the embodiment, the void 121 may be provided for each of the portions which the insulating portions 113 and 114 contact.

The safety devices such as the protecting circuit module (PCM) and the secondary protection device may be installed in the top case 120 in order to prevent the increase in high temperature, overcharge and overdischarge, etc. For this, the PCM (not shown) is assembled to the bare cell 110 in a state where the PCM is assembled in the top case 120. Herein, any one of the PCM is connected to the positive pole of the bare cell 110 and the other one is connected to the negative pole of the bare cell 110. At this time, the secondary protection device (not shown) may be connected between the PCM and the bare cell 110 and the secondary protection device may be connected to the positive pole or negative pole depending on characteristics of the bare cell 110.

The void 121 may have various structures in which a gap or a space can be provided at a portion where ends of the insulating portions 113 and 114 are positioned in order to evade the inference with the insulating portions 113 and 114 or may have a groove shape. As such, the void 121 has the groove shape, such that interference evasion with the insulating portions 113 and 114 is excellent and the top case 120 may be easily formed in the top case 120.

As such, the first support rib 122 is provided at a portion where the void 121 is not formed so as to support on the top of the bare cell 110, for example, a portion where the lead tabs 111 and 112 are provided, such that the assemblability between the bare cell 110 and the top case 120 is improved and an assembling state is stably maintained and a plurality of terminal holes 123 are provided on the top so as to expose the terminal of the PCM to the outside.

The first support rib 122 may be constituted in plural like the embodiment and may extend downwards at both sides of the void 121 with the void 121 interposed therebetween.

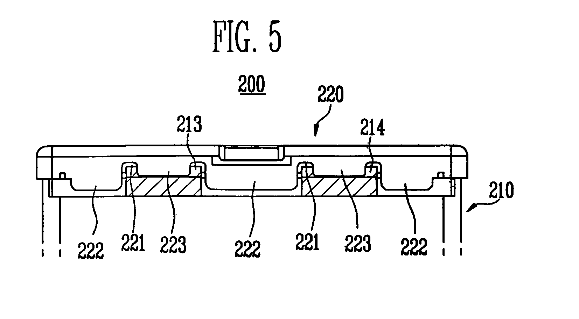

FIG. 5 is a front view showing a secondary battery according to a second embodiment of the present invention. As shown in the figure, the secondary battery 200 according to the second embodiment of the present invention includes a bare cell 210 in which insulating portions 213 and 214 are provided in a lead tab (not shown) and a top case 220 where a void 221 is provided so as to evade interference with the insulating portions 213 and 214 while being assembled to the bare cell 210. Herein, since the bare cell 210 and the top case 220 will be described in detail in the secondary battery 100 according to the first embodiment of the present invention, a difference from the secondary battery 100 according to the first embodiment will primarily be described.

The top case 220 in the embodiment may further include a second support rib 223 in the void 221 and the second support rib 223 serves not to expose the lead tabs 111 and 112.

The second support rib 223 may have a width smaller than a width of the void 221 so as to disable the ends of the insulating portions 213 and 214 to be interfered by assembling with the top case 120. In addition, the second support rib 223 can be changed depending on exterior shapes or sizes of the insulating portions 213 and 214 and the lead tabs. Further, the second support rib 223 may extend downward to be supported on the top of the bare cell 210 like the first support rib 222, but like the embodiment, the second support rib 223 may extend up to a position which a lead tab (not shown) exposed by the void 221 covers.

An operation of the secondary battery according to the present invention having the above-mentioned configuration will be described below.

By the secondary battery 100 according to the first embodiment shown in FIGS. 3 and 4, in case of the lead tabs 111 and 112 are provided in the bare cell 110, the insulating portions 113 and 114 constituted by the insulating tape, the insulating material, or the like that covers the lead tabs 111 and 112 are deteriorated by the heat while sealing. As a result, the exterior shape of the insulating portions 113 and 114 are irregular, such that the size stability may be deteriorated. Therefore, when the top case 120 is covered and assembled in the insulating portions 113 and 114, the interference between the top case 120 and the insulating portions 113 and 114 can be evaded by the void 121. As such, since the void 121 is formed so as to expose the ends of the insulating portions 113 and 114, the insulating portions 113 and 114 do not influence the exterior size of the secondary battery 100 and as a result, it is possible to achieve the stabilization of the manufacturing process and secure the reliability and competency of an inner pack to which the bare cell 110 is applied.

The top case 120 can easily be assembled with the bare cell 110 by the first support rib 122 supporting the top of the bare cell 110 and can stably maintain the assembling state.

In addition, like the secondary battery 200 according to the second embodiment shown in FIG. 5, the second support rib 223 formed in the void 221 is further provided so as not to expose the lead tabs to the outside. Further, the second support rib 223 may extend downwards to be supported on the top of the bare cell 210.

As described above, although a detailed embodiment has been described in detail, various modifications can be made without departing from the scope of the present invention. Accordingly, the scope of the present invention should not be limited based on the described embodiments and should be determined in light of the appended claims to be described below.

## Claims

1. A secondary battery (100, 200) comprising:
an electrode assembly having a first electrode (111, 211) and a second electrode (112, 212),
a bare cell (110, 210) for mounting the electrode assembly therein,
a top case (120, 220) coupled to the upper part of the bare cell (110, 210),
a first insulating portion (113; 213) for insulating at least a part of the first electrode (111; 211), and
a second insulating portion (114; 214) for insulating at least a part of the second electrode (112; 212), the first and second insulating portions (113, 114; 213, 214) being formed in the upper part of the bare cell (110, 210),
wherein
voids (121, 221) are provided between the first and second insulating portions (113, 114; 213, 214) and the top case (120, 220) to space apart the top case from the first and second insulating portions (113, 114; 213, 214), the voids (121, 221) comprising openings (121, 221) formed in the top case (120, 220),
the openings (121, 221) define at least first and second openings (121, 221) sized to space apart the top case (120, 220) from the first and second insulating portions (113, 114; 213, 214), respectively, and the at least first and second openings (121, 221) are formed on at least a first side wall of the top case (120, 220), and
the at least first side waii of the top case (120, 220) further comprises first support ribs (122, 222) formed between the openings (121, 221) to support the top case (120, 220) on the bare cell (110, 210),
**characterized in that**
the at least first side wall of the top case (220) further comprises second support ribs (223) at locations of the openings (221) being adapted to cover the first and second electrodes (111, 112).

2. Secondary battery (100, 200) of claim 1, wherein a sealing portion (115, 215) is provided in the upper part of the bare cell (110, 210) to seal the bare cell (110, 210), and wherein the first and second insulating portions (113, 114; 213, 214) are provided at locations between the first and second electrodes (111, 112; 211, 212) and the sealing portion (115, 215).

3. Secondary battery (100, 200) of claim 1 or 2, wherein the first and second insulating portions (113, 114; 213, 214) comprise an insulating material and/or are covered at least partially by an insulating tape.

4. Secondary battery (200) of claim 1, wherein the second support ribs (223) have a width smaller than the width of the openings (221).

5. Secondary battery (200) of claim 1 or 4, wherein the first support ribs (222) are sized to support the top case (220) on the bare cell (110, 210).

6. Secondary battery (100, 200) of any of claims 1, 4 or 5, wherein the first and/or second support ribs (122, 222; 223) protrude from the top surface of the top case (120, 220) towards its bottom surface.

7. Secondary battery (100, 200) of any of the previous claims, wherein a first side wall of the top case (120, 220) comprises the following structural elements in alternating order:
a first end portion, a first first support rib (122), a first opening (121), a second first support rib (122), a second opening (121), a third first support rib (122) and a second end portion, or
a first end portion, a first first support rib (222), a first opening (221), a first second support rib (223) formed within the first opening (221), a second first support rib (222), a second opening (221), a second second support rib (223) formed within the second opening (221), a third first support rib (222) and a second end portion.

8. Secondary battery (100, 200) of any of the claims 1 or 4 to 7, wherein the openings (121, 221) extend to the bottom of said first side wall of the top case (120, 220) such that no top case material is formed at a lower part of said first side wall and/or wherein the openings (121, 221) are cut-outs of the first side wall from below.

9. Secondary battery (100, 200) of any of the previous claims, wherein the bare cell (110, 210) is formed of a pouch type.

## Patentansprüche

1. Sekundärbatterie (100, 200), umfassend:
eine Elektrodenanordnung mit einer ersten Elektrode (111, 211) und einer zweiten Elektrode (112, 212),
eine Rohzelle (110, 210) zum Lagern der Elektrodenanordnung darin,
ein mit dem oberen Teil der Rohzelle (110, 210) verbundenes Obergehäuse (120, 220).
ein erster isolierender Abschnitt (113; 213) zum Isolieren mindestens eines Teils der ersten Elektrode (111; 211), und
eine zweiter isolierender Abschnitt (114; 214) zum Isolieren mindestens eines Teils der zweiten Elektrode (112; 212), wobei die ersten und zweiten isolierenden Abschnitte (113, 114; 213, 214) im oberen Teil der Rohzelle (110, 210) ausgebildet sind,
wobei
zwischen den ersten und zweiten isolierenden Abschnitten (113, 114; 213, 214) und dem Obergehäuse (120, 220) Hohlräume (121, 221) vorgesehen sind, um das Obergehäuse von den ersten und zweiten isolierenden Abschnitten (113, 114; 213, 214) zu beabstanden, wobei die Hohlräume (121, 221) in dem Obergehäuse (120, 220) ausgebildete Öffnungen (121, 221) umfassen,
wobei die Öffnungen (121, 221) mindestens erste und zweite Öffnungen (121, 221) definieren, die so bemessen sind, dass sie das Obergehäuse (120, 220) jeweils von den ersten und zweiten isolierenden Abschnitten (113, 114; 213, 214) beabstanden, und die mindestens ersten und und zweiten Öffnungen (121, 221) an mindestens einer ersten Seitenwand des Obergehäuses (120, 220) ausgebildet sind, und
die mindestens erste Seitenwand des Obergehäuses (120, 220) ferner zwischen den Öffnungen (121, 221) ausgebildete erste Tragrippen (122, 222) umfasst, um das Obergehäuse (120, 220) auf der Rohzelle (110, 220) abzustützen,
**dadurch gekennzeichnet, dass**
die mindestens erste Seitenwand des Obergehäuses (220) ferner zweite Tragrippen (223) an Stellen der Öffnungen (221) umfasst, die dazu ausgebildet sind, die ersten und zweiten Elektroden (111, 112) abzudecken.

2. Sekundärbatterie (100, 200) nach Anspruch 1, wobei ein Dichtungsabschnitt (115, 215) im oberen Teil der Rohzelle (110, 210) vorgesehen ist, um die Rohzelle (110, 210) abzudichten, und wobei die ersten und zweiten isolierenden Abschnitte (113, 114; 213, 214) an Stellen zwischen den ersten und zweiten Elektroden (111, 112; 211, 212) und dem Dichtungsabschnitt (115, 215) vorgesehen sind.

3. Sekundärbatterie (100, 200) nach Anspruch 1 oder 2, wobei die ersten und zweiten isolierenden Abschnitte (113, 114; 213, 214) ein Isoliermaterial umfassen und/oder mindestens teilweise mit Isolierband abgedeckt sind.

4. Sekundärbatterie (200) nach Anspruch 1, wobei die Breite der zweiten Tragrippen (223) geringer ist als die Breite der Öffnungen (221).

5. Sekundärbatterie (200) nach Anspruch 1 oder 4, wobei die ersten Tragrippen (222) so bemessen sind, dass sie das Obergehäuse (220) auf der Rohzelle (110, 210) tragen.

6. Sekundärbatterie (100, 200) nach einem der Ansprüche 1, 4 oder 5, wobei die ersten und/oder zweiten Tragrippen (122, 222; 223) aus der oberen Fläche des Obergehäuses (120, 220) in Richtung seiner unteren Fläche vorstehen.

7. Sekundärbatterie (100, 200) nach einem der vorstehenden Ansprüche, wobei eine erste Seitenwand des Obergehäuses (120, 200) die folgenden Konstruktionselemente in alternierender Reihenfolge aufweist:
einen ersten Endabschnitt, eine erste erste Tragrippe (122), eine erste Öffnung (121), eine zweite erste Tragrippe (122), eine zweite Öffnung (121), eine dritte erste Tragrippe (122) und einen zweiten Endabschnitt, oder
einen ersten Endabschnitt, eine erste erste Tragrippe (222), eine erste Öffnung (221), eine innerhalb der ersten Öffnung (221) ausgebildete erste zweite Tragrippe (223), eine zweite erste Tragrippe (222), eine zweite Öffnung (221), eine innerhalb der zweiten Öffnung (221) ausgebildete zweite zweite Tragrippe (223), eine dritte erste Tragrippe (222) und einen zweiten Endabschnitt.

8. Sekundärbatterie (100, 200) nach einem der Ansprüche 1 oder 4 bis 7, wobei sich die Öffnungen (121, 221) zum Boden der ersten Seitenwand des Obergehäuses (120, 220) derart erstrecken, dass sich an einem unteren Teil der ersten Seitenwand kein Material des Obergehäuses ausbildet und/oder wobei die Öffnungen (121, 221) Ausschnitte der ersten Seitenwand von unten sind.

9. Sekundärbatterie (100, 200) nach einem der vorstehenden Ansprüche, wobei die Rohzelle (110, 210) nach Art einer Tasche ausgebildet ist.

## Revendications

1. Batterie secondaire (100, 200), comprenant :
un ensemble d'électrodes comportant une première électrode (111, 211) et une deuxième électrode (112, 212),
une cellule nue (110, 210) pour monter l'ensemble d'électrodes à l'intérieur de celle-ci,
une boîte supérieure (120, 220) couplée à la partie supérieure de la cellule nue (110, 210),
une première partie isolante (113 ; 213) pour isoler au moins une partie de la première électrode (111 ; 211 ), et
une deuxième partie isolante (114 ; 214) pour isoler au moins une partie de la deuxième électrode (112 ; 212), les première et deuxième parties isolantes (113, 114 ; 213, 214) étant formées dans la partie supérieure de la cellule nue (110, 210),
dans laquelle :
des vides (121, 221) sont réalisés entre les première et deuxième parties isolantes (113, 114 ; 213, 214) et la boîte supérieure (120, 220), de façon à espacer mutuellement la boîte supérieure des première et deuxième parties isolantes (113, 114 ; 213, 214), les vides (121, 221) comprenant des ouvertures (121, 221) formées dans la boîte supérieure (120, 220),
les ouvertures (121, 221) définissent au moins des première et deuxième ouvertures (121, 221) dimensionnées de façon à espacer mutuellement la boîte supérieure (120, 220) des première et deuxième parties isolantes (113, 114 ; 213, 214), respectivement, et les au moins première et deuxième ouvertures (121, 221) étant formées sur au moins une première paroi latérale de la boîte supérieure (120, 220), et
la au moins une première paroi latérale de la boîte supérieure (120, 220) comprend de plus des premières nervures de support (122, 222) formées entre les ouvertures (121, 221) pour supporter la boîte supérieure (120, 220) sur la cellule nue (110, 210),
**caractérisée en ce que** :
la au moins une première paroi latérale de la boîte supérieure (220) comprend de plus des deuxièmes nervures de support (223) en des emplacements des ouvertures (221), adaptées de façon à recouvrir les première et deuxième électrodes (111, 112).

2. Batterie secondaire (100, 200) selon la revendication 1, dans laquelle une partie d'étanchéité (115, 215) est disposée dans la partie supérieure de la cellule nue (110, 210) de façon à sceller étanchement la cellule nue (110, 210), et dans laquelle les première et deuxième parties isolantes (113, 114 ; 213, 214) sont disposées en des emplacements entre les première et deuxième électrodes (111, 112 ; 211, 212) et la partie d'étanchéité (115, 215).

3. Batterie secondaire (100, 200) selon la revendication 1 ou 2, dans laquelle les première et deuxième parties isolantes (113, 114 ; 213, 214) comprennent un matériau isolant et/ou sont recouvertes au moins partiellement par une bande isolante.

4. Batterie secondaire (200) selon la revendication 1, dans laquelle les deuxièmes nervures de support (223) ont une largeur inférieure à la largeur des ouvertures (221).

5. Batterie secondaire (200) selon la revendication 1 ou 4, dans laquelle les premières nervures de support (222) sont dimensionnées de façon à supporter la boîte supérieure (220) sur la cellule nue (110, 210).

6. Batterie secondaire (100, 200) selon l'une quelconque des revendications 1, 4 ou 5, dans laquelle les première et/ou deuxième nervures de support (122, 222 ; 223) font saillie à partir de la surface supérieure de la boîte supérieure (120, 220) vers sa surface inférieure.

7. Batterie secondaire (100, 200) selon l'une quelconque des revendications précédentes, dans laquelle une première paroi latérale de la boîte supérieure (120, 220) comprend les éléments structurels suivants, en ordre alterné :
une première partie d'extrémité, une première première nervure de support (122), une première ouverture (121), une deuxième première nervure de support (122), une deuxième ouverture (121), une troisième première nervure de support (122) et une deuxième partie d'extrémité,
ou
une première partie d'extrémité, une première première nervure de support (222), une première ouverture (221), une première deuxième nervure de support (223) formée à l'intérieur de la première ouverture (221), une deuxième première nervure de support (222), une deuxième ouverture (221), une deuxième deuxième nervure de support (223) formée à l'intérieur de la deuxième ouverture (221), une troisième première nervure de support (222) et une deuxième partie d'extrémité.

8. Batterie secondaire (100, 200) selon l'une quelconque des revendications 1 et 4 à 7, dans laquelle les ouvertures (121, 221) s'étendent vers le bas de ladite première paroi latérale de la boîte supérieure (120, 220), de telle sorte qu'aucun matériau de la boîte supérieure ne soit formé en une partie inférieure de ladite première paroi latérale, et/ou dans laquelle les ouvertures (121, 221) sont des entailles de la première paroi latérale réalisées à partir du dessous.

9. Batterie secondaire (100, 200) selon l'une quelconque des revendications précédentes, dans laquelle la cellule nue (110, 210) est constituée sous une forme du type poche.
